# FASCICULE DE BREVET EUROPEEN

(11) **EP 1 225 360 B1**
(45) Date de publication et mention de la délivrance du brevet: **30.08.2006**
(21) Numéro de dépôt: 02290050.0
(22) Date de dépôt: 10.01.2002
(51) Int. Cl.: F16D 23/14

(54) **Dispositif auto-centreur de butée de débrayage**
Selbstzentrierende Vorrichtung für ein Kupplungsausrücklager
Self-centering device for a clutch release mechanism

(30) Priorité: 23.01.2001 FR 0100894
(43) Date de publication de la demande: 24.07.2002
(73) Titulaire: Aktiebolaget SKF, 415 50 Göteborg (SE)
(72) Inventeur: Arnault, Benoît, 37540 Saint Cyr sur Loire (FR); Girardin, Hervé, 37300 Joue les Tours (FR)
(74) Mandataire: Casalonga, Axel

(56) Documents cités:
- FR-A- 2 744 776
- FR-A- 2 755 487
- US-A- 3 920 107
- US-A- 4 643 286
- US-A- 4 852 710
- US-A- 4 854 436

## Description

La présente invention relève du domaine des butées de débrayage, du type comportant un palier à roulement monté sur un organe de manoeuvre muni au moins d'une partie cylindrique. L'organe de manoeuvre est actionné mécaniquement ou hydrauliquement pour déplacer le roulement axialement de façon que celui-ci agisse par l'intermédiaire de sa bague tournante sur le diaphragme d'un embrayage et assure ainsi sa manoeuvre.

L'invention concerne plus particulièrement les butées d'embrayage dans lesquelles un organe élastique d'auto-alignement est disposé entre la bague non tournante du roulement de butée de débrayage et l'organe de manoeuvre supportant ledit roulement de butée.

On connaît le document français n° 2 755 487 qui décrit une butée d'embrayage comprenant un palier à roulement muni d'une bague tournante et d'une bague non tournante et monté sur un organe de manoeuvre muni d'une partie cylindrique et d'une collerette radiale sur laquelle vient en appui la bague tournante du roulement, un organe d'auto-alignement élastique de la bague non tournante par rapport à l'organe de manoeuvre étant disposé autour de la partie cylindrique de l'organe de manoeuvre et en contact axial avec la bague non tournante. L'organe d'auto-alignement élastique comprend un moyen d'appui axial sur la bague non tournante et un moyen de solidarisation axiale et radiale sur la partie cylindrique de l'organe de manoeuvre, lesdits moyens d'appui et de solidarisation étant séparés l'un de l'autre. L'organe d'auto-alignement comprend une portion radiale dans laquelle sont prévues des languettes élastiques flexibles axialement venant en appui contre une portion radiale de la bague non tournante, et une couronne de languettes d'accrochage s'étendant vers l'intérieur à partir de la portion radiale et axialement du côté opposé aux languettes élastiques. A l'état monté, les languettes d'accrochage exercent sur la partie cylindrique de l'organe de manoeuvre un effort radial dirigé vers l'intérieur, pour empêcher par effet d'arc-boutement tout mouvement axial de l'organe d'auto-alignement en direction opposée à celle de la bague non tournante.

Comme il subsiste un certain jeu radial entre l'alésage de la bague non tournante du roulement et l'élément de manoeuvre, la butée peut s'auto-aligner par rapport au diaphragme de l'embrayage si les axes de ces deux pièces ne sont pas initialement confondus, l'auto-alignement étant ensuite maintenu par contact axial de friction entre les surfaces radiales de la partie non tournante et de la collerette de l'élément de manoeuvre, même si la butée n'est plus en contact avec le diaphragme ou lorsque le contact se fait avec une précharge faible.

Si un tel dispositif donne toute satisfaction pour de nombreux cas, il peut poser certains problèmes, notamment dans le cas où il subsiste très peu de place dans le sens axial entre les parties frontales radiales de la bague tournante et de la bague non tournante. En effet, il n'est alors plus possible de disposer l'élément d'auto-alignement même partiellement, entre les deux bagues dans le sens axial. Par ailleurs, il n'est pas envisageable de réaliser un passage étroit ou une étanchéité frottante dans le sens radial, dans la mesure où un déplacement radial est possible entre le roulement et l'élément de manoeuvre.

L'invention propose de résoudre ces problèmes.

L'invention propose un dispositif d'auto-centrage très compact et fournissant en outre une excellente étanchéité frontale pour le roulement de butée, cette étanchéité gardant toute son efficacité indépendamment du déplacement radial du roulement par rapport à l'élément de manoeuvre lors de l'auto-centrage du roulement.

Le dispositif de butée d'embrayage, selon un aspect de l'invention, est du type comprenant un élément d'attaque destiné à être monté sur un élément de manoeuvre. L'élément d'attaque comprend un roulement pourvu d'une bague tournante et d'une bague non tournante, ledit roulement étant apte à se déplacer radialement par rapport à l'élément de manoeuvre pour son auto-alignement par rapport au diaphragme de l'embrayage, la bague non tournante comprenant une portion radiale dirigée vers l'intérieur. Le dispositif comprend un moyen de solidarisation axiale de l'élément d'attaque sur l'élément de manoeuvre. Le dispositif comprend un organe d'auto-alignement centré sur la bague non tournante et pourvu d'éléments élastiques axialement, de façon que ledit organe d'auto-alignement exerce sur le moyen de solidarisation axiale et sur la bague non tournante des efforts axiaux de direction opposée et maintienne la bague non tournante en contact axial permanent avec une surface radiale d'appui de l'élément de manoeuvre.

Avantageusement, l'organe d'auto-alignement est centré sur la portion radiale dirigée vers l'intérieur de la bague non tournante.

Avantageusement, le moyen de solidarisation axiale comprend une rondelle-frein. La rondelle-frein peut comprendre un anneau sensiblement radial et une pluralité de languettes s'étendant vers l'intérieur et apte s'accrocher sur une surface de l'élément de manoeuvre.

Dans un mode de réalisation de l'invention, l'organe d'auto-alignement comprend une portion de centrage sur la bague non tournante, et une portion radiale dans laquelle sont formés les éléments élastiques.

Dans un mode de réalisation de l'invention, la portion de centrage est axiale et emmanchée sur la bague non tournante.

Dans un mode de réalisation de l'invention, l'organe d'auto-alignement comprend une portion d'étanchéité qui peut former un passage étroit avec la bague tournante. Le passage étroit peut présenter des dimensions indépendantes de la position de l'élément d'attaque sur l'élément de manoeuvre.

La bague tournante peut comprendre une portion radiale dirigée vers l'intérieur, l'organe d'auto-alignement étant disposé radialement à l'intérieur de la bague tournante, notamment à l'intérieur de la portion radiale de la bague tournante.

Dans une variante, les éléments élastiques sont en appui sur une surface sensiblement radiale du moyen de solidarisation axiale.

Dans une autre variante, les éléments élastiques sont en appui sur la portion radiale de la bague non tournante.

L'élément d'attaque de butée d'embrayage, selon un aspect de l'invention, est destiné à être monté sur un élément de manoeuvre pour former un dispositif de butée d'embrayage. L'élément d'attaque comprend un roulement pourvu d'une bague tournante, d'une bague non tournante et d'une rangée d'éléments roulants, ledit roulement étant prévu pour être apte à se déplacer radialement par rapport à l'élément de manoeuvre pour son auto-alignement par rapport au diaphragme de l'embrayage. La bague non tournante comprend une portion radiale dirigée vers l'intérieur. L'élément d'attaque comprend un organe d'auto-alignement centré sur la bague non tournante et pourvu d'éléments élastiques axialement, issus d'une portion radiale dudit organe d'auto-alignement, au moins une partie desdits éléments élastiques étant, à l'état libre, axialement en saillie par rapport à ladite portion radiale.

L'organe d'auto-alignement peut comprendre sur sa périphérie une portion axiale dirigée en sens opposé à celui de la portion axiale emmanchée sur la bague non-tournante, c'est-à-dire en direction du diaphragme. La portion axiale périphérique vient en regard de l'alésage de la bague tournante. Comme les deux bagues du roulement sont parfaitement concentriques, on peut prévoir un passage étroit radial de très faible dimension entre la portion axiale périphérique de l'organe d'auto-alignement et l'alésage de la bague tournante. Ce passage étroit reste toujours identique quel que soit le déplacement radial du roulement lors de son auto-alignement sur le diaphragme.

Les languettes d'auto-alignement viennent en appui axial contre la surface radiale d'un élément de blocage et d'appui rapporté sur l'élément de manoeuvre et formant moyen de solidarisation axial. La face de la portion radiale de la bague non tournante opposée à celle en contact avec la portion radiale de l'organe d'auto-alignement est en contact avec une surface radiale de l'élément de manoeuvre, par exemple avec une surface radiale d'une collerette s'étendant vers l'extérieur.

La rondelle-frein pourvue dans sa partie centrale de languettes légèrement obliques par rapport à un plan radial et légèrement flexibles dans le sens axial, peut être introduite sur une portion cylindrique de l'élément de manoeuvre et venir s'autobloquer par effet d'arc-boutement. L'effort radial exercé par les languettes de l'organe d'auto-alignement sur la rondelle-frein maintient donc par réaction la portion radiale de la bague non tournante du roulement en appui contre la surface radiale d'appui de l'élément de manoeuvre. Bien entendu, tout autre moyen de solidarisation axial pourrait être envisagé, pourvu qu'il comporte une surface sensiblement radiale pour coopérer avec les languettes de l'organe d'auto-alignement.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue en coupe axiale d'un dispositif de butée de débrayage, selon un mode de réalisation de l'invention;
- la figure 2 est une vue de détail de la figure 1;
- la figure 3 montre une variante de la figure 2;

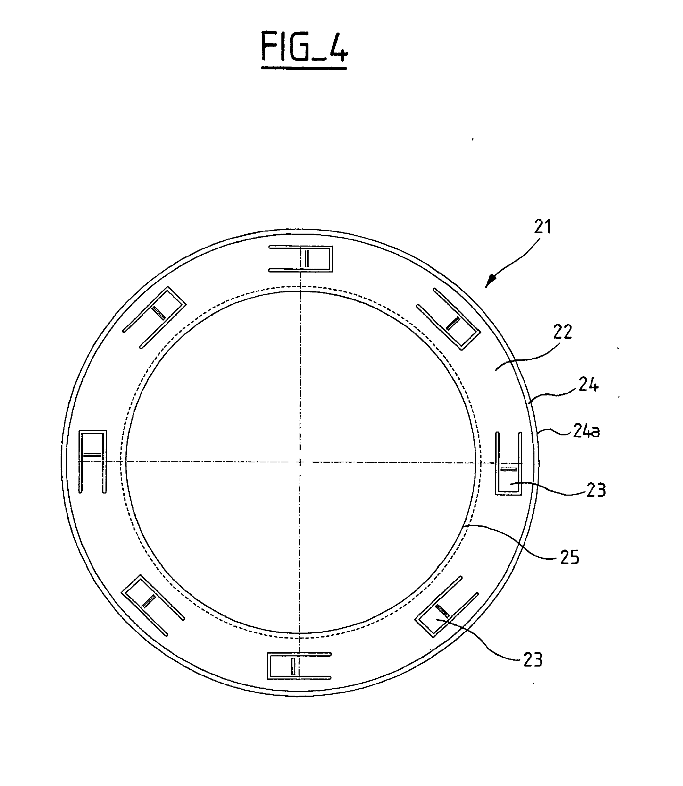

- la figure 4 est une vue de face en élévation de l'organe d'auto-alignement du dispositif de la figure 1;

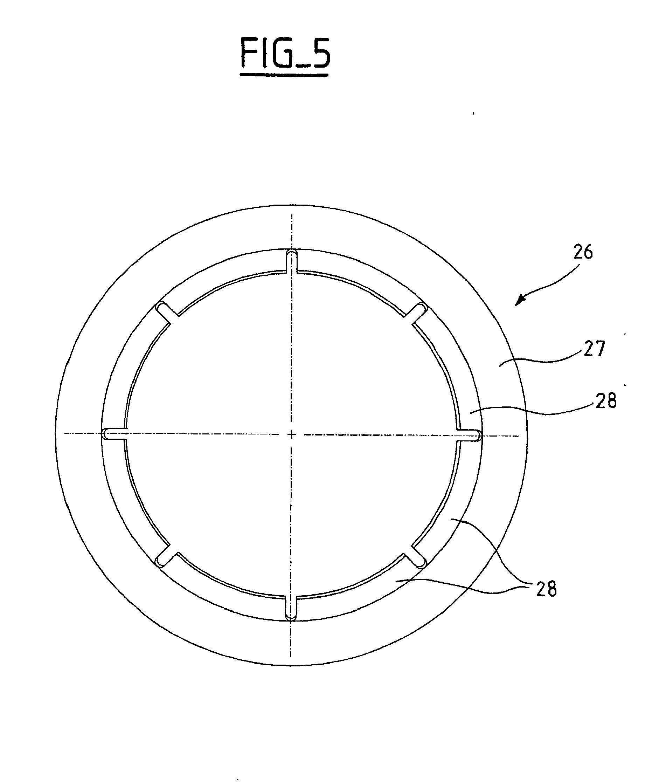

- la figure 5 est une vue de face en élévation de la rondelle-frein du dispositif de la figure 1; et
- la figure 6 est une variante de la figure 2.

Tel qu'elle est illustrée, la butée de débrayage comprend un palier à roulement 1 monté sur un élément de manoeuvre 2, avantageusement réalisé en matière synthétique et qui comprend un corps cylindrique 3 et une surface radiale d'appui 4. L'organe de manoeuvre 2 peut se présenter par exemple sous la forme d'un piston d'un dispositif hydraulique de manoeuvre d'embrayage ou bien d'un poussoir séparé prolongeant axialement ledit piston. L'élément de manoeuvre 2 est monté sur un tube-guide 5 stationnaire, tandis que ledit élément de manoeuvre 2 est apte à se déplacer en translation selon l'axe du tube-guide 5. Une pièce annulaire 6, solidaire du tube-guide 5, entoure radialement le corps cylindrique 3 de l'élément de manoeuvre 2 et forme une paroi extérieure d'un cylindre annulaire formé entre le tube-guide 5 et la pièce 6. Une extrémité libre de l'organe de manoeuvre 2 fait saillie axialement de la pièce 6 et comprend une portion cylindrique 7 d'épaisseur réduite par rapport au corps cylindrique 3 et pourvue d'une surface extérieure 8. La surface radiale d'appui 4 est disposée axialement entre le corps cylindrique 3 et la portion cylindrique 8.

Le palier à roulement 1 comprend une bague intérieure non tournante 9 à paroi mince réalisée par emboutissage d'une tôle ou d'un tube et présentant un chemin torique 10 pour une rangée d'éléments roulants 11 maintenus par une cage 12. La bague intérieure 9 comprend également une prolongation dirigée vers l'intérieur sous la forme d'une portion radiale 13 et une prolongation cylindrique 14 du côté opposé à la portion radiale 13.

Le palier à roulement 1 se complète par une bague extérieure tournante 15 également à paroi mince réalisée par emboutissage d'une tôle ou d'un tube qui présente un chemin torique 16 pour les éléments roulants 11, ainsi qu'une portion radiale 17 qui vient en contact avec la surface d'un diaphragme 18 d'un dispositif d'embrayage pour actionner celui-ci lors du déplacement axial de l'ensemble de la butée supporté par l'élément de manoeuvre 2. Le palier à roulement 1 est protégé du côté opposé au diaphragme 18 par un élément d'étanchéité 19 fixé sur la bague extérieure 15 et possédant une lèvre 20 venant en contact de frottement avec la prolongation cylindrique 14 de la bague intérieure 9.

La surface radiale d'appui peut être prolongée radialement vers l'extérieur du corps cylindrique 3 grâce à une collerette radiale de l'élément de manoeuvre 2 de faible dimension radiale, de façon que, tout en étant en contact avec la portion radiale 13 de la bague intérieure 9, elle soit entourée radialement par ladite bague intérieure 9 et se situe sensiblement dans le même plan radial que les éléments roulants 11 ou que la cage 12.

Un organe d'auto-alignement élastique de la bague non-tournante 9 par rapport à l'organe de manoeuvre 2, référencé 21 dans son ensemble, est disposé autour de la portion cylindrique 7 de l'élément de manoeuvre 2 et axialement sensiblement au niveau de la portion radiale 13 de la bague intérieure 9 et de la prolongation radiale 17 de la bague extérieure 15. L'organe d'auto-alignement 21 est annulaire et comprend une portion radiale 22 à partir de laquelle sont issues par découpe une pluralité de languettes élastiques 23 disposées dans le sens circonférentiel, flexibles axialement et présentant une surface convexe de contact. A titre de variante, on peut prévoir des languettes axialement élastiques mais orientées radialement.

A l'état libre, l'extrémité libre des languettes élastiques 23 vient axialement en saillie par rapport à la portion radiale 22 de l'organe d'auto-alignement.

L'organe d'auto-alignement 21 comprend une portion axiale 24 qui s'étend à la périphérie de la portion radiale 22 en direction de la prolongation radiale 17 de la bague extérieure 15. On peut prévoir la portion axiale 24 avec des dimensions telles qu'elle forme un passage étroit avec la bague extérieure 15, assurant ainsi une bonne étanchéité. En outre, la portion axiale 24 participe à la bonne rigidité de la portion radiale 22. Plus précisément, la portion axiale 24 s'étend axialement sur toute l'épaisseur de la portion radiale 17 de la bague extérieure 15, jusqu'au plan de contact avec le diaphragme18, et ceci avec un faible jeu radial entre l'alésage de la portion radiale 17 de la bague extérieure 15 et la surface cylindrique extérieure 24a de ladite portion axiale 24.

L'organe d'auto-alignement 21 comprend, en outre, une portion axiale 25 se raccordant à l'extrémité de petit diamètre de la portion radiale 22 et orientée en sens opposé à la portion axiale 24. La portion axiale 25 vient s'ajuster dans l'alésage circulaire de la portion radiale 13 de la bague intérieure 9 avec des tolérances assurant un bon centrage de l'organe d'auto-alignement 21 sur la bague intérieure 9. On peut prévoir que la portion axiale 25 soit emmanchée avec un léger serrage dans l'alésage de ladite portion radiale 14. Un tel emmanchement facilite la manipulation de la bague intérieure 9 associée à l'organe d'auto-alignement 21 sans risque de perte de pièce.

Le dispositif de butée de débrayage se complète par une rondelle-frein 26 formant moyen de solidarisation axial et comprenant une partie annulaire radiale 27 et une pluralité de languettes 28, dans le cas présent au nombre de 8, issues du bord intérieur de la partie annulaire 27 et dirigées radialement vers l'intérieur et légèrement obliques, axialement en direction du diaphragme 18. Les languettes 28 de la rondelle-frein 26 sont en contact avec la surface cylindrique extérieure 8 de la portion cylindrique 7 et empêchent tout mouvement de démontage par effet d'arc-boutement. Ainsi, la portion radiale 22 de l'organe d'auto-alignement 21 est disposée axialement entre la rondelle-frein 26 et la portion radiale 13 de la bague intérieure non tournante 9.

Les languettes élastiques 23 de l'organe d'auto-alignement 21 viennent en appui sur la portion annulaire radiale 27 de la rondelle-frein 26 et exercent sur celle-ci un effort axial dirigé vers le diaphragme 18.

Ainsi, la portion radiale 13 de la bague intérieure 9 est en contact d'un côté avec une surface radiale d'appui 4 de l'élément de manoeuvre 2, et de l'autre côté avec la portion radiale 22 de l'organe d'auto-alignement 21. Les languettes 23 issues de ladite portion radiale 22 font saillie axialement en direction du diaphragme 18 et viennent en appui élastique sur la rondelle-frein 26. Par réaction, l'organe d'auto-alignement 21 génère donc sur la portion radiale 13 de la bague non tournante 9 un effort axial en direction de la surface radiale d'appui 4 de l'élément de manoeuvre 2, assurant ainsi le maintien d'un appui axial permanent entre ladite bague non tournante 9 et la surface radiale d'appui 4 de l'élément de manoeuvre 2. Ceci permet le maintien par friction de la position radiale adéquate du roulement 1 par rapport à l'élément de manoeuvre 2 obtenu lorsque le roulement 1 s'est auto-centré par rapport au diaphragme 18 de l'embrayage.

En outre, le dispositif de butée de débrayage comprend un ressort hélicoïdal 29, un soufflet en matériau souple 30 et une interface 31, réalisée en matériau synthétique, fixée sur la prolongation axiale 14 de la bague intérieure 9, recevant l'appui du ressort hélicoïdal 29 et supportant l'une des extrémités du soufflet 30 dont l'autre extrémité peut être fixée à un élément stationnaire et qui protège ainsi le système de commande de débrayage contre l'intrusion de particules polluantes.

On comprendra que l'organe d'auto-alignement élastique 21 étant lié radialement à la bague intérieure 9 grâce au centrage de la portion axiale 25 dudit organe 21 dans l'alésage de ladite bague 9, le passage étroit qui existe radialement entre l'alésage de la bague extérieure tournante 15 et la portion axiale 24 de l'organe d'auto-alignement 21 garde toujours la même valeur, même lors du déplacement radial du palier à roulement 1 par rapport à l'élément de manoeuvre 2, par exemple lors de l'auto-centrage du roulement 1 sur le diaphragme 18.

A titre de variante, la bague intérieure peut être tournante et la bague extérieure peut être non tournante.

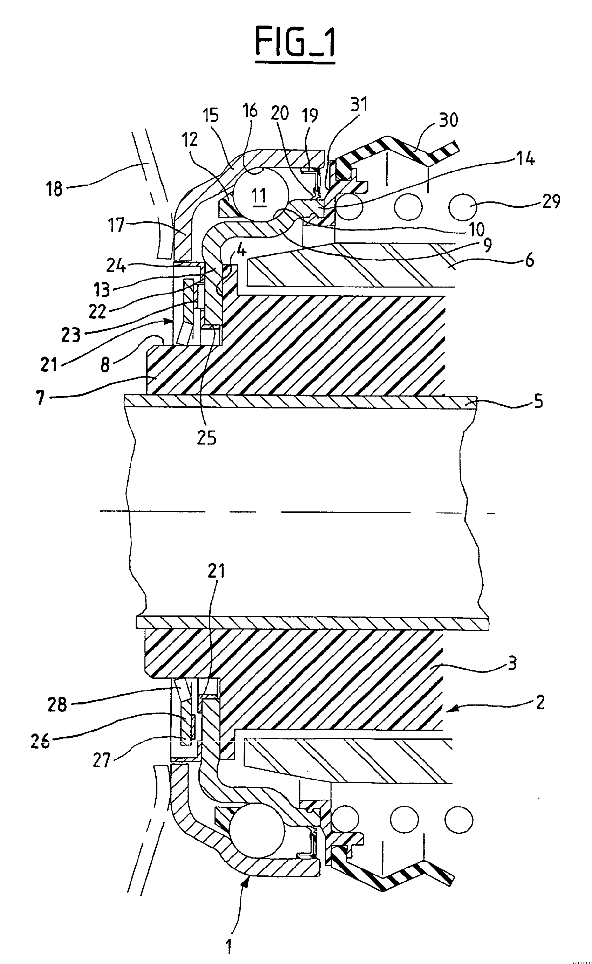

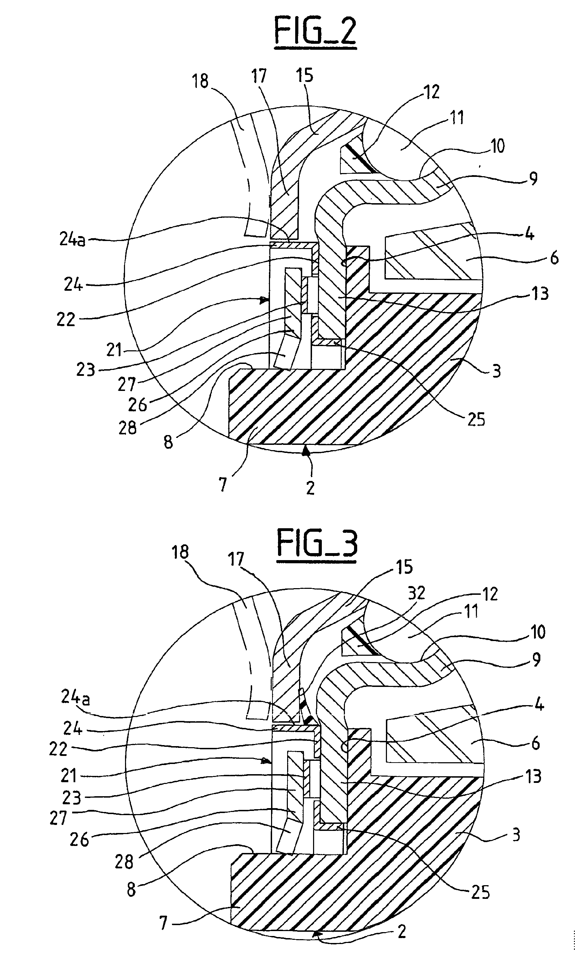

Sur la figure 3, est illustrée une variante dans laquelle l'organe d'auto-alignement 21 comprend, en outre, une lèvre d'étanchéité 32 surmoulée sur la surface extérieure cylindrique 24a de la portion axiale 24, axialement entre la portion radiale 13 de la bague intérieure 9 et la portion radiale 17 de la bague extérieure 15, pour parfaire l'étanchéité entre lesdites bagues intérieure 9 et extérieure 15. Ici, l'étanchéité est assurée à la fois par le passage étroit précédemment décrit en référence aux figures 1 et 2 et la lèvre d'étanchéité 32.

L'organe d'auto-alignement élastique 21 étant solidaire tant axialement que radialement de la bague intérieure 9, l'étanchéité est assurée de façon fiable et durable par la portion axiale 24 et par la lèvre d'étanchéité 32 quel que soit le mouvement radial du roulement 1 par rapport à l'élément de manoeuvre 2. Le palier à roulement 1 est apte à se déplacer radialement par rapport à l'élément de manoeuvre 2, les languettes 23 de l'organe d'auto-alignement 21 glissant radialement par rapport à la portion radiale 27 de la rondelle-frein 26 et la portion radiale 13 de la bague intérieure 9 glissant radialement contre la surface radiale d'appui 4 de l'élément de manoeuvre 2. Tout effort axial exercé sur la rondelle-frein 26, dans la direction opposée à la collerette radiale 4, tend à provoquer l'arc-boutement des languettes d'accrochage 28 de ladite rondelle-frein 26 entre la portion radiale 27 et la surface cylindrique 8 de l'élément de manoeuvre 2. Les efforts axiaux exercés par les languettes 23 de l'organe d'auto-alignement 21 sont donc repris intégralement par la portion radiale 27 de la rondelle-frein 26.

Les languettes d'accrochage 28 sont relativement rigides et peu déformables en comparaison des languettes élastiques 23. On évite ainsi une interaction entre les languettes d'accrochage 28 et les languettes élastiques 23. En d'autres termes, il existe un découplage entre la fonction de retenue axiale assurée par la rondelle-frein 26 et la fonction d'auto-alignement par friction assurée par l'organe d'auto-alignement 21 muni de ses languettes 23 axialement élastiques.

Le découplage des fonctions permet d'utiliser une rondelle-frein 26 relativement épaisse et rigide qui peut ainsi offrir une surface d'appui stable avec un positionnement axial précis sur l'élément de manoeuvre. La maîtrise de la position axiale de la rondelle-frein 26 par rapport à l'élément de manoeuvre 2 permet donc de déterminer avec précision la précontrainte exercée par les languettes élastiques 23, compte tenu de l'épaisseur de la portion radiale 13 de la bague intérieure 9 et de l'épaisseur de la portion radiale 22 de l'organe d'auto-alignement 21.

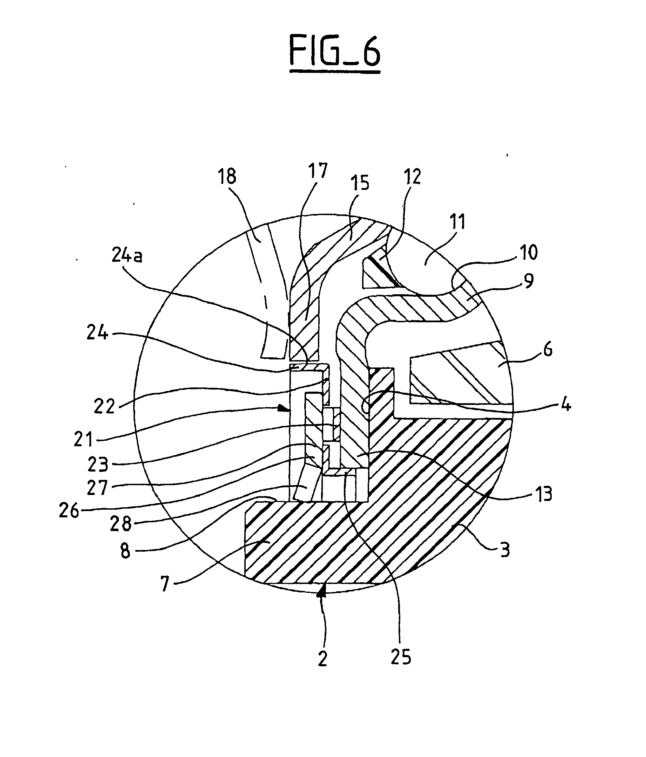

Sur la figure 6, est illustrée une variante dans laquelle la portion radiale 22 de l'organe d'auto-alignement 21 est en contact avec la portion radiale 27 de la rondelle-frein 26. Les languettes 23 sont dirigées axialement, à l'opposé de la rondelle-frein 26, vers la portion radiale 13 de la bague non tournante 9 sur laquelle elles exercent un effort axial tendant à la maintenir en contact avec la surface radiale 4 de l'élément de manoeuvre 2.

L'organe d'auto-alignement 21 doit être centré dans l'alésage de la portion radiale 13 de la bague non tournante 9, mais ne doit pas être monté serré dans ledit alésage afin de ne pas entraver la liberté de déplacement axial relatif entre ces deux éléments. Les languettes élastiques 23 de l'organe d'auto-alignement 21 assurent ainsi, d'une part le maintien en appui axial permanent et calibré de la portion radiale 13 de la bague non tournante 9 du roulement contre la surface radiale d'appui 4 et, d'autre part le maintien en appui axial de la portion radiale 22 de l'organe d'auto-alignement 21 contre la partie annulaire radiale 27 de la rondelle frein 26.

Grâce à l'invention, on obtient un dispositif d'autocentrage très compact et fournissant, en outre, une excellente étanchéité frontale pour le roulement de butée. Cette étanchéité garde son efficacité au cours du temps et quel que soit le déplacement radial du roulement par rapport à l'organe de manoeuvre lors de l'autocentrage du roulement.

## Revendications

1. Élément d'attaque destiné à être monté sur un élément de manoeuvre pour former un dispositif de butée d'embrayage, l'élément d'attaque comprenant un roulement (1) pourvu d'une bague tournante (15), d'une bague non tournante (9) et d'une rangée d'éléments roulants, ledit roulement étant prévu pour être apte à se déplacer radialement par rapport à l'élément de manoeuvre pour son auto-alignement par rapport au diaphragme d'un embrayage, la bague non tournante comprenant une portion radiale (13) dirigée vers l'intérieur, ledit élément d'attaque comprenant un organe d'auto-alignement (21), **caractérisé par le fait que** l'organe d'auto-alignement (21)est centré sur la bague non tournante (9) et pourvu d'éléments élastiques (23) axialement, issus d'une portion radiale (22) dudit organe d'auto-alignement, au moins une partie desdits éléments élastiques étant, à l'état libre, axialement en saillie par rapport à ladite portion radiale, les éléments élastiques étant prévus pour exercer des efforts axiaux sur la partie radiale interne (13) de la bague non tournante(9) pour maintenir cette dernière en contact axial permanent avec une surface radiale d'appui (4) d'un élément de manoeuvre (2).

2. Dispositif de butée d'embrayage, du type comprenant un élément d'attaque selon la revendication 1, ***caractérisé par le fait qu'**il comprend une rondelle-frein (26) formant un moyen de solidarisation axiale de l'élément d'attaque sur l'élément de manoeuvre,* de façon que ledit organe d'auto-alignement exerce sur le moyen de solidarisation axiale et sur la bague non tournante (9) des efforts axiaux de direction opposée>>

3. Dispositif selon la revendication 2, **caractérisé par le fait que** l'organe d'auto-alignement est centré sur la portion radiale dirigée vers l'intérieur de la bague non tournante.

4. Dispositif selon la revendication 2 ou 3, **caractérisé par le fait que** la rondelle-frein comprend un anneau (27) sensiblement radial et une pluralité de languettes (28) s'étendant vers l'intérieur et apte s'accrocher sur une surface de l'élément de manoeuvre.

5. Dispositif selon l'une quelconque des revendications 2 à 4 **caractérisé par le fait que** l'organe d'auto-alignement comprend une portion de centrage (25) sur la bague non tournante, et une portion radiale (22) dans laquelle sont formés les éléments élastiques (23).

6. Dispositif selon la revendication 5, **caractérisé par le fait que** la portion de centrage est axiale et emmanchée sur la bague non tournante.

7. Dispositif selon l'une quelconque des revendications 2 à 6, **caractérisé par le fait que** l'organe d'auto-alignement comprend une portion d'étanchéité (24).

8. Dispositif selon la revendication 7, **caractérisé par le fait que** ladite portion d'étanchéité forme un passage étroit avec la bague tournante, ledit passage étroit présentant des dimensions indépendantes de la position de l'élément d'attaque sur l'élément de manoeuvre.

9. Dispositif selon l'une quelconque des revendications 2 à 8, **caractérisé par le fait que** les éléments élastiques sont en appui sur une surface sensiblement radiale du moyen de solidarisation axiale.

10. Dispositif selon l'une quelconque des revendications 2 à 8, **caractérisé par le fait que** les éléments élastiques sont en appui sur la portion radiale (13) de la bague non tournante.

## Claims

1. Actuating element intended to be mounted on an operating element to form a clutch bearing device, the actuating element comprising a rolling bearing (1) provided with a rotating race (15), with a non-rotating race (9) and with a row of rolling elements, the said rolling bearing being designed to be able to be displaced radially with respect to the operating element so as to self-align with the diaphragm of a clutch, the non-rotating race comprising an inwardly-directed radial portion (13), the said actuating element comprising a self-alignment member (21), **characterized in that** the self-alignment member (21) is centred on the non-rotating race (9) and is provided with axially elastic elements (23), coming from a radial portion (22) of the said self-alignment member, at least some of the said elastic elements in their free state projecting axially with respect to the said radial portion, the elastic elements being intended to exert axial forces on the inner radial part (13) of the non-rotating race (9) in order to keep the latter in permanent axial contact with a radial bearing surface (4) of an operating element (2).

2. Clutch bearing device according to Claim 1, of the type comprising an actuating element **characterized in that** it comprises a locking washer (26) forming a means of axially securing the actuating element to the operating element, so that the said self-alignment member exerts, on the means of axial securing and on the non-rotating race (9), axial forces in opposite directions.

3. Device according to Claim 2, **characterized in that** the self-alignment member is centred on the inwardly-directed radial portion of the non-rotating race.

4. Device according to Claim 2 or 3, **characterized in that** the locking washer comprises a roughly radial annulus (27) and a number of tabs (28) extending inwards and capable of catching on a surface of the operating element.

5. Device according to any one of Claims 2 to 4, **characterized in that** the self-alignment member comprises a portion (25) for centring on the non-rotating race, and a radial portion (22) in which the elastic elements (23) are formed.

6. Device according to Claim 5, **characterized in that** the centring portion is axial and push-fitted onto the non-rotating race.

7. Device according to any one of Claims 2 to 6, **characterized in that** the self-alignment member comprises a sealing portion (24).

8. Device according to Claim 7, **characterized in that** the said sealing portion forms a narrow passage with the rotating race, the said narrow passage having dimensions independent of the position of the actuating element on the operating element.

9. Device according to any one of Claims 2 to 8, **characterized in that** the elastic elements rest against a roughly radial surface of the means of axial securing.

10. Device according to any one of Claims 2 to 8, **characterized in that** the elastic elements rest against the radial portion (13) of the non-rotating race.

## Patentansprüche

1. Andruckelement zur Montage auf einem Betätigungselement zur Bildung einer Kupplungsausrückeinrichtung, wobei das Eingriffselement ein Lager (1) mit einem umlaufenden Ring (15), einem stillstehenden Ring (9) und einen Kranz von Wälzkörpern aufweist, wobei das Wälzlager dazu eingerichtet ist, sich radial gegenüber dem Betätigungselement bewegen zu können, um sich selbst gegenüber einer Kupplungsmembranfeder ausrichten zu können, wobei der stillstehende Ring einen nach innen gerichteten radialen Abschnitt (13) aufweist und wobei das Andruckelement eine Selbstzentrierungseinrichtung (21) aufweist,
**dadurch gekennzeichnet, dass** die Selbstzentrierungseinrichtung (21) auf dem stillstehenden Ring (9) zentriert ist und mit in Axialrichtung elastischen Elementen (23) versehen ist, die von einem radialen Abschnitt (22) der Selbstzentrierungseinrichtung ausgehen, wobei wenigstens ein Teil der elastischen Elemente im freien Zustand gegenüber dem radialen Abschnitt axial vorstehen, und wobei die elastischen Elemente dazu eingerichtet sind auf den radial nach innen vorstehenden Abschnitt (13) des stillstehenden Rings (9) Axialkräfte auszuüben um letzteren ständig mit einer radial verlaufenden Anlagefläche (4) des Betätigungselementes (2) in Eingriff zu halten.

2. Anordnung nach Anspruch 1, **dadurch gekennzeichnet, dass** sie eine Sicherungsscheibe (26) aufweist, die ein axiales Befestigungsmittel für die Anlageeinrichtung an der Betätigungseinrichtung bilden derart, dass die Selbstzentrierungseinrichtung auf das axiale Befestigungsmittel und den stillstehenden Ring (9) in entgegengesetzter Richtung wirkende Kräfte ausübt.

3. Anordnung nach Anspruch 2, **dadurch gekennzeichnet, dass** die Selbstzentrierungseinrichtung auf dem radial nach innen zeigenden Abschnitt des stillstehenden Rings zentriert ist.

4. Anordnung nach einem der Ansprüche 2 oder 3, **dadurch gekennzeichnet, dass** die Sicherungsscheibe einen im Wesentlichen radial sich erstreckenden Ring (27) aufweist und eine Reihe von Zungen (28), die nach innen zeigen und dazu eingerichtet sind, sich auf einer Fläche des Betätigungselementes zu verankern.

5. Anordnung nach einem der Ansprüche 2 bis 3, **dadurch gekennzeichnet, dass** die Selbstzentrierungseinrichtung auf dem stillstehenden Ring einen Zentrierabschnitt (25) aufweist und einen radialen Abschnitt (22), in dem die elastischen Elemente (23) ausgebildet sind.

6. Anordnung nach Anspruch 5, **dadurch gekennzeichnet, dass** der Zentrierabschnitt sich axial erstreckt und in den stillstehenden Ring eingesteckt ist.

7. Anordnung nach einem der Ansprüche 2 bis 6, **dadurch gekennzeichnet, dass** die Selbstzentrierungseinrichtung einen Dichtungsabschnitt (24) aufweist.

8. Vorrichtung nach Anspruch 7, **dadurch gekennzeichnet, dass** der Dichtungsabschnitt von einem engen Spalt zu dem umlaufenden Ring gebildet ist, wobei der enge Spalt Abmessungen aufweist, die von der Lage des Andruckelementes an dem Betätigungselement unabhängig sind.

9. Vorrichtung nach einem der Ansprüche 2 bis 8, **dadurch gekennzeichnet, dass** die elastischen Elemente an einer im Wesentlichen radialen Fläche des axialen Befestigungsmittels anliegen.

10. Vorrichtung nach einem der Ansprüche 2 bis 8, **dadurch gekennzeichnet, dass** die elastischen Elemente an dem radialen Abschnitt (13) des stillstehenden Rings anliegen.
